# EUROPEAN PATENT SPECIFICATION

(11) **EP 0 295 460 B1**
(45) Date of publication and mention of the grant of the patent: **27.12.1995**
(21) Application number: 88108219.2
(22) Date of filing: 24.05.1988
(51) Int. Cl.: G06F 19/00, G06F 9/44

(54) **Editor for expert system**
Editor für Expertensysteme
Editeur pour systèmes experts

(30) Priority: 15.06.1987 US 61832
(43) Date of publication of application: 21.12.1988
(73) Proprietor: International Business Machines Corporation, Armonk, N.Y. 10504 (US)
(72) Inventor: Derr, Andrew Glenn, Endicott New York 13760 (US); McLaughlin, Charles Andrew, Endicott New York 13760 (US)
(74) Representative: Schäfer, Wolfgang, Dipl.-Ing.

(56) References cited:
- WO-A-86/00156
- EXPERT SYSTEMS. vol. 3, no. 3, July 1986, OXFORD GB pages 166 - 183; M.H. RICHER: 'An evaluation of expert system development tools'

## Description

The invention relates to expert systems and more particularly to an editing method and system for creating expert systems.

Computer programs in the area of artificial intelligency and expert systems are well known. A book entitled The Fifth Generation by Edward Feigenbaum and Pamela McCorduc, Addison-Wesley 1983, and a book entitled Building Expert Systems by Frederick Hayes-Roth, Donald Waterman and Douglas Lenat, Addison-Wesley, 1984, give a good introduction to the state of the art in this area.

U.S. Patent 4,648,044 (Hardy), U.S. Patent 4,595,982 (Burt), and U.S. Patent 4,644,479 (Bellows) are representative of recently issued patents in the area of expert systems.

There are a large number of commercially available programs in this area. Some of these programs are designed to run on large mainframe computers. Others are designed to run on relatively small personal computers.

Computer programs which facilitate the development of expert systems are generally termed Expert System Shells. A program commercially available from the International Business Machines Corporation as program Number 5798-RWQ entitled "Expert Systems Development Environment" is an example of a Expert System Shell that is designed to run on large computers. A program entitled "GURU" marketed by Micro Data Base Systems Inc. is an example of an Expert Systems Shell that is designed to run on relatively small personal computers. A variety of such programs are commercially available.

Many of the commercially available Expert System Shells have editors which facilitate entering the data and rules necessary to create an expert system. The available editors generally fall into two broad categories.

First there are some Expert System Shells which use text editors to enter parameters data and rules. Many text editors are commercially available. For example, an editor called the "Personal Editor" is commercially available from IBM for use on Personal Computers. Many other text editors are also commercially available. A text editor is what is used to enter information into the previously referenced expert shell called "GURU".

The second type of editor generally used is represented by the editor in the previously referenced program called the "Expert System Development Environment". The editor used in this program has a series of panels which provide selections. However, the panels provided by the "Expert System Development Environment" program do not automatically lead the operator through a series of panels that request information required to define classes and nodes as does the present invention. The panels presented by editors such as the "Expert System Development Environment" provide the operator with a list of choices and the operator must choose the sequence of steps he wants to use in the definition process. With the present invention, the sequence necessary to define each particular class and node is automtically presented to the operator, thereby making the present invention exceptionally easy to learn and use.

Expert Systems vol.3, no.3, july 1986, Oxford GB, pages 166-183, M.H. Richter: "An evaluation of expert system development tools", reviews four different tools for developing expert systems, namely, S.1 (Teknowledge), Knowledge Craft (Carnegie Group), KEE (Intellicorp) and ART (Inference). The tools are evaluated with respect to five criteria: basic features, development environment, functional-ity, support and cost factors.

An object of the present invention is to provide an editor which facilitates the generation of expert systems.

Another object of the present invention is to provide a method of editing information and data to facilitate the creation of expert systems.

Another object of the present invention is to provide a system which facilitates editing data and information to facilitate the creation of expert systems.

These objects are achieved by a system and a method according to claims 1 and 4 respectivly. Preferred embodiments are specified in the dependent claims.

The present invention provides a contextual editor for an expert system. The editor leads the operator through a series of screens which designate classes of information, logical nodes, and the interrelation of the nodes. The screens are so arranged that they prevent the operator from providing classes or nodes with logically insufficient information. At the end of each definition the screen automatically shows a logical tree which graphically illustrates the logical interconnection between the nodes.

The editor provided by the present invention provides the knowledge base developer with a guided knowledge entry system that modifies its behavior based on the context of the knowledge structures being entered. This approach not only facilitates the creation of the rules base knowledge, but also frequently prevents the user from entering invalid values or logic structures. Also, the guided editing approach allows the developer to learn and use the system much more quickly, thus becoming productive much sooner.

One of the preferred way of carrying out the invention is described in detail below with reference to the drawings which show an embodiment of the invention:

Figures 1A to 1P illustrate an example of the type of series of screens that would be presented to an operator.

Figure 2 is a block diagram of the computer program which is used to implement the embodiment of the invention.

Figure 3 is a block diagram expansion of the "Edit Rule Node" block.

Figure 4 is a block diagram expansion of the "Get Type of Insert" block.

The embodiment will be described by first explaining a typical editing session and then explaining a flow diagram of the method that is implemented in an editor in accordance with the present invention.

In the example given herein the following terms will have the following meanings:
- Rules Base:: This is used as a synonym for a conventional knowledge base.
- Class:: represents a specific piece of input data to the system.
- Class Scope:: This indicates to which data this class applies. It can have three values: GLOBAL, LOCAL or EXTERNAL. These terms have the conventional programming meaning.
- Class Procedure:: The program that is run to obtain the input value to the class.
- Parameters:: This has the conventional programming meaning.
- Class value list:: List of valid input to the class.
- Nodes:: Nodes can only have values of true of false. There are a plurality of types of nodes. As shown herein there are five types of nodes, namely, GOAL, EVIDENCE, AND, OR, and NOT.
- Goal:: The final action or conclusion that is the culmination of a set of logical relationships:
- Evidence:: The input data which will be examined.
- AND, OR and NOT:: Conventional logical connectives.
- Rule Tree:: The way that the rule nodes are interrelated.
- Type Of Node Insertion:: This has three choices, namely, CHILD, SIBLING or NEW LEVEL. These define how the node being inserted relates to the existing nodes.

The meaning of the terms used is best understood by considering a simple example. Consider as a simple example a system which gathers information about an automobile to determine if the automobile is out of gas. (It should be clearly understood that this is a very trivial example for the purposes of illustration only.) The example has two "classes" of information. The classes are:
1) "Is the car stalled" and
2) "Is the gas gauge pointing to empty".

The "goal" in this example is "Add gas to the car".
The "evidence nodes" have values of "true" or "false" with reference to (1) and (2) above.
The "AND node" connects (1) and (2) above and the goal.

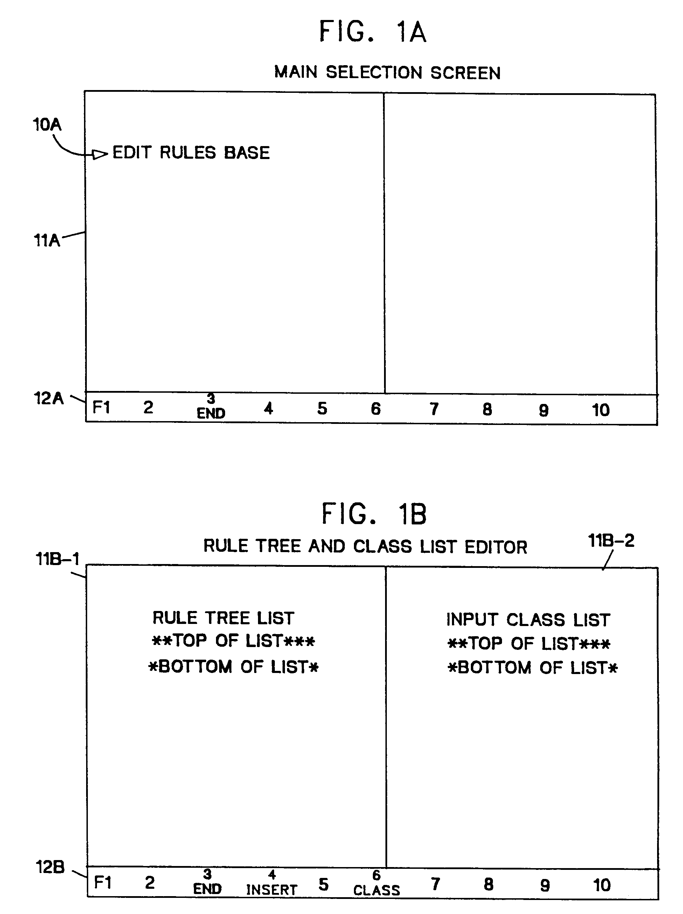

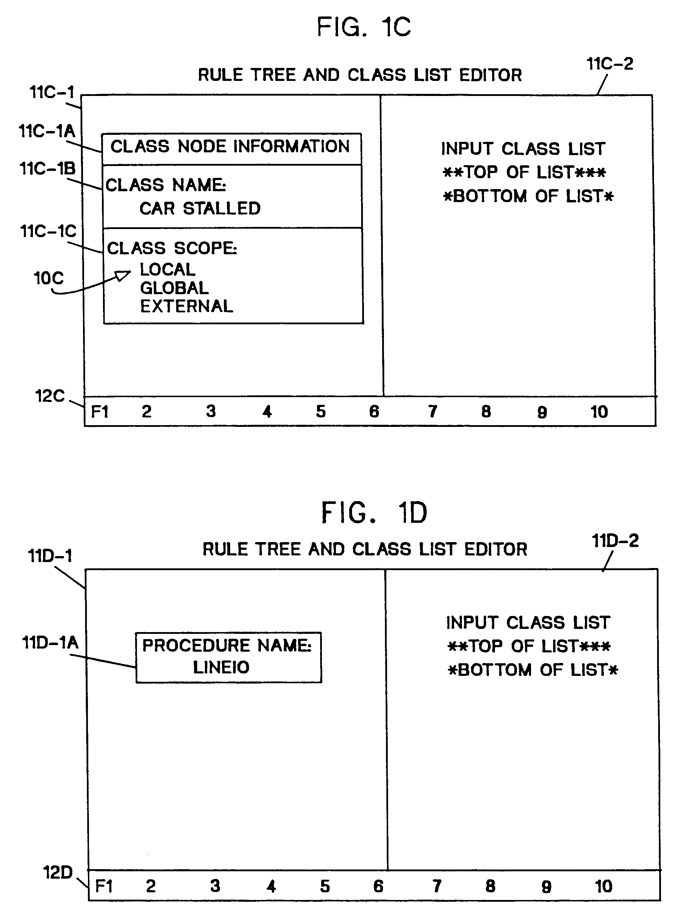

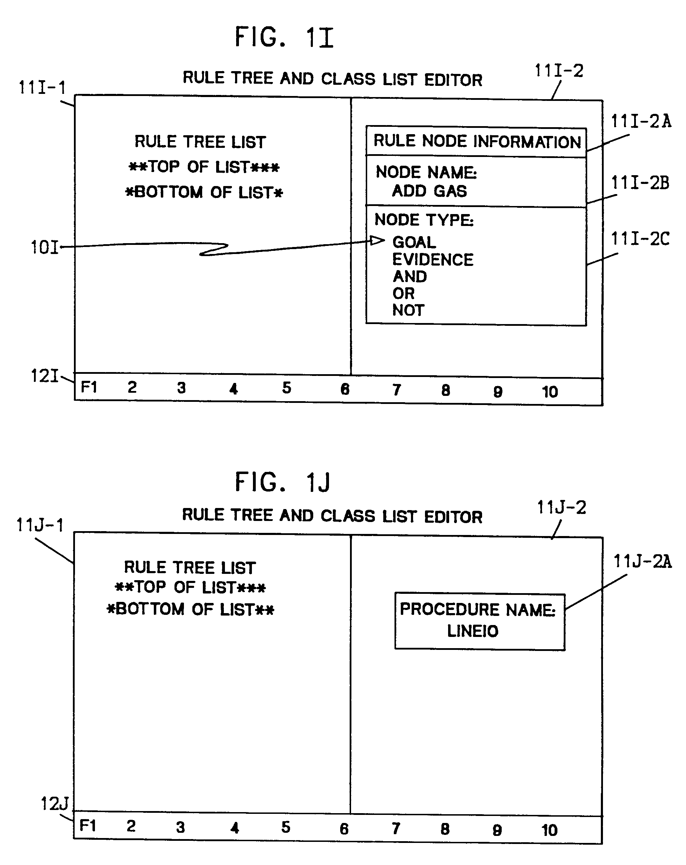

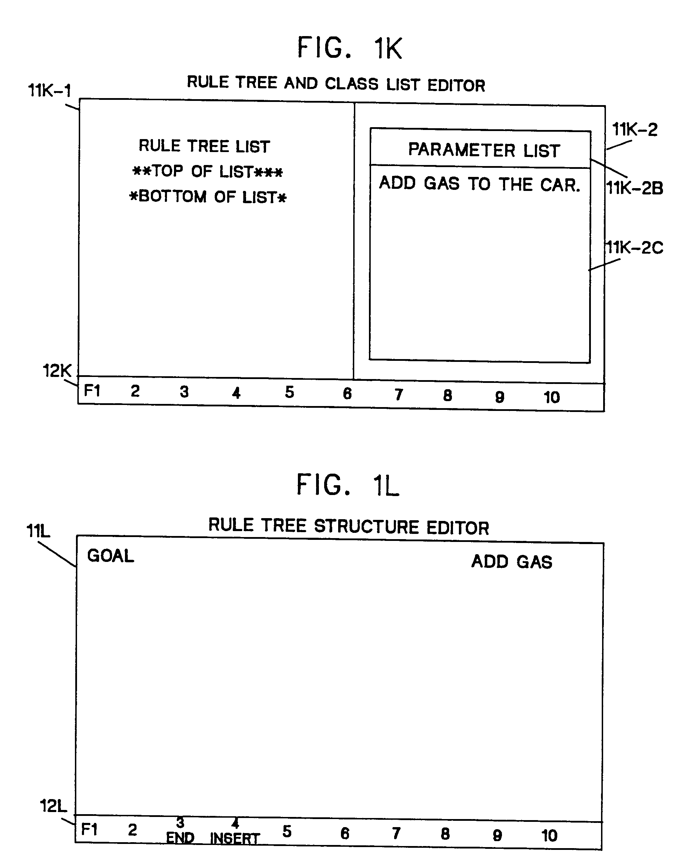

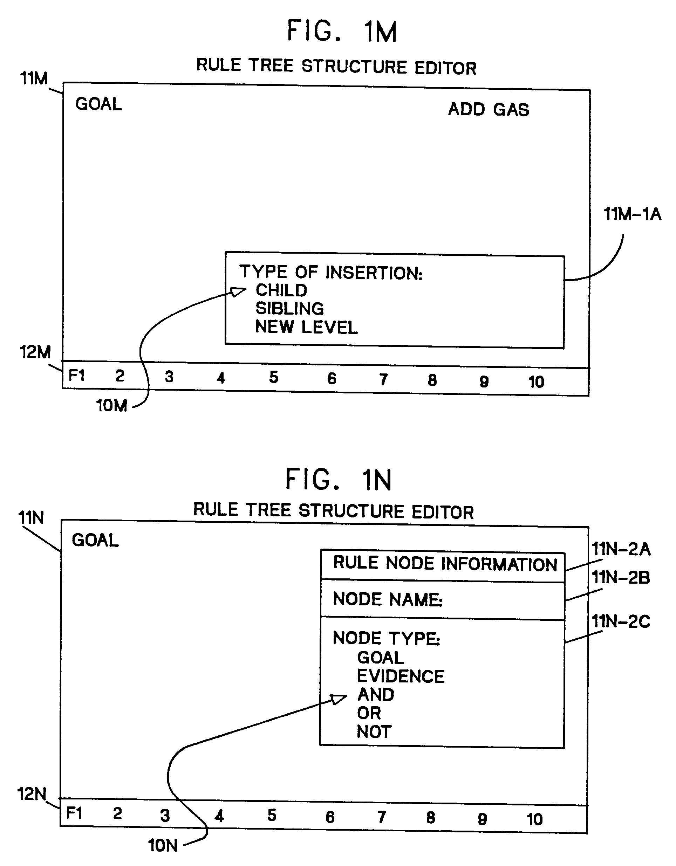

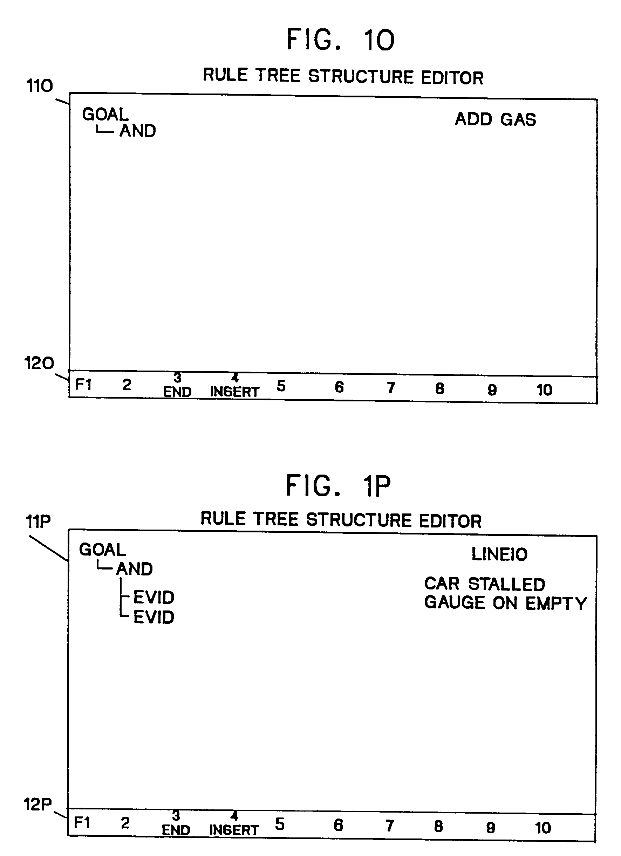

An example of a typical editing session is demonstrated in figures 1A through 1P. This example shows how the editor of the present invention can be used to build a knowledge base for the simple example given above.

In figure 1A, the main selection screen 11A is displayed. This is the first screen that the user will see upon entry to the system. The conventional cursor is represented as mark designated 10A. To enter the editor, the user selects the "Edit Rules Base" line with the cursor and presses ENTER. The conventional "function" keys are shown in block 12A. In this panel the only function key which has an assigned value is function key F3 which is used to "QUIT" the editing session. The screen shown only has one selection line, namely, "Edit Rules Base". Naturally, other lines could be present; however, the other lines are not relevant to this invention, hence, they are not shown.

The main "editor screen" is illustrated in figure 1B. This screen has two sections which are designated 11B-1 and 11B-2. Section 11B-1, shows a list of classes (input data). Section 11B-2, shows the rule trees (knowledge structures). Since in this example there are no classes or rule trees defined as yet, the sections 11B-1 and 11B-2 do not show any classes or rule trees. The user can toggle between these lists by pressing F6 as shown in block 12B. It should be noted that the definition of F6 changes based upon which list is currently in active use.

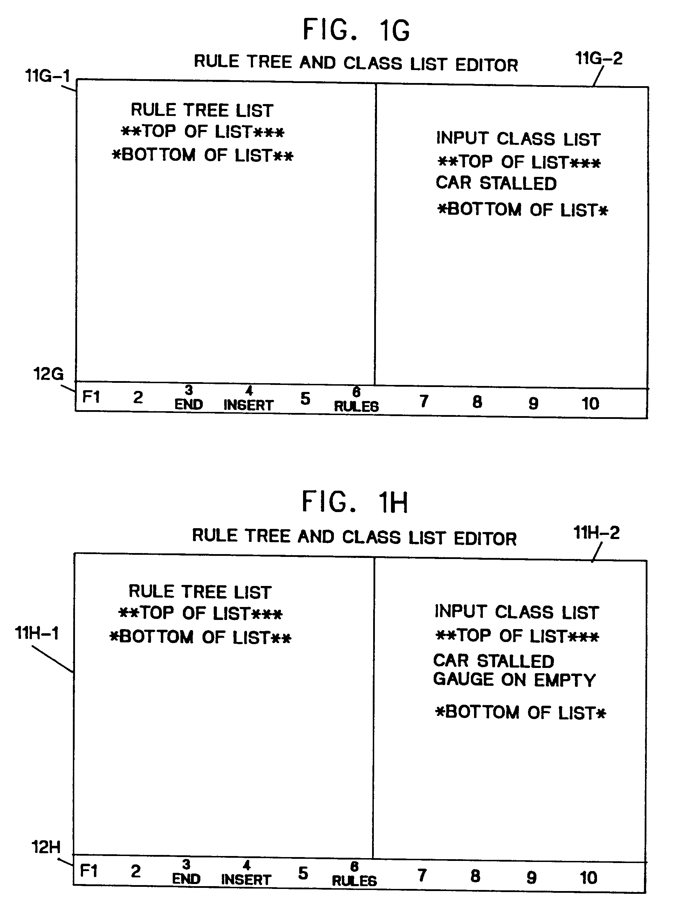

Figure 1C illustrates what happens when a user chooses to insert a new class by pressing the F4 or INSERT key when viewing the panel shown in Figure 1B. The user is automatically guided through the series of panels shown in figures 1C through 1F, which results in the definition of a new class. The panels shown obtain the values for the class definition, including name, scope, procedure required to gather input data, parameters to that procedure, and the valid input values. Upon completion of these panels, the user is returned to the main editor panel (Figure 1G), with a new class shown in the class list.

When the user presses key F4 in the panel shown in Figure 1B, the display shown in Figure 1C is generated. Figure 1C shows in box 11C-1A an indication of what this panel does. Box 11C-1B is an entry panel where the system displays the word "Class Name:" and the operator enters the words "Car Stalled". Block 11C-1C allows the operator to use the cursor 10C to define the scope of the class being defined as either Local, Global or External. Note that the information in Block 11C-2 is identical to the information that is shown in 11B-2. There is no additional information other than that described above in block 11C-1.

Figure 1D shows what the system does after the operator presses the ENTER key (the ENTER key is not explicitly shown on the drawing). As shown in Figure 1D, the system asks for Procedure name by displaying box 11D-1A. The operator enters a procedure name. In this example the procedure name is LINEIO. This is the name of a program stored elsewhere and not shown here. This program is the program which will actually acquire the data for the input class being defined.

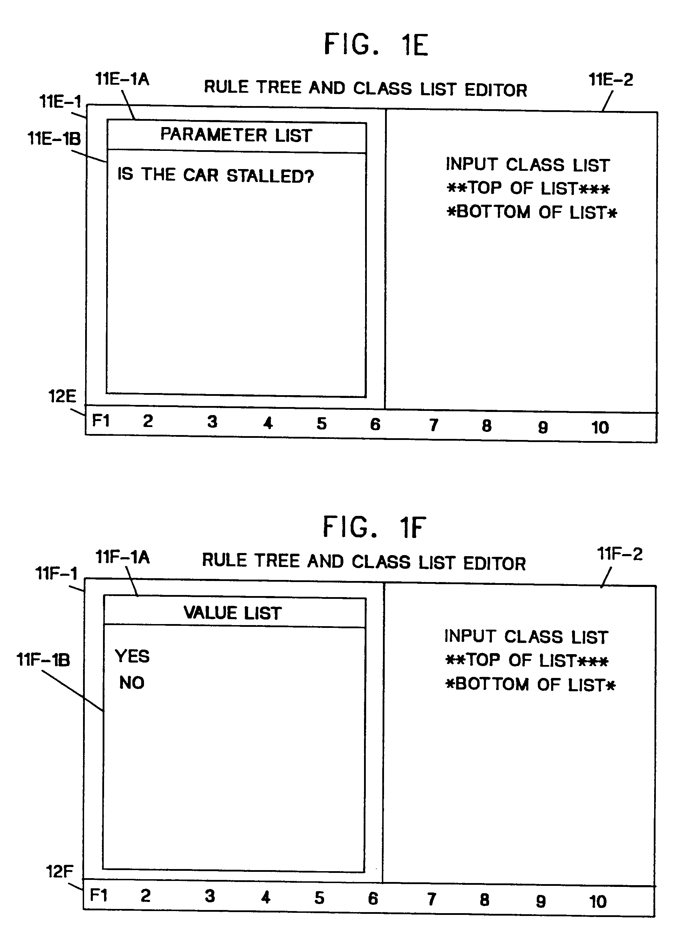

After the name of the procedure is entered and the operator pushes the ENTER key, the system displays the panel shown in Figure 1E. Box 11E-1A indicates to the operator the function performed by this panel. The operator enters the parameters in box 11E-1B. In this case the procedure LINEIO expects a character string as a conventional parameter. The character string "Is the car stalled?" is therefore entered in box 11E-1B. The operator then presses the ENTER key resulting in the panel shown in Figure 1F.

Box 11F-1A displays a message telling the operator what function is performed by this panel. In this case the operator must enter in box 11F-1B the class value list which have values of YES and NO. After entering these values and pressing the ENTER key, the panel shown in Figure 1G is displayed.

The panel in Figure 1G is similar to the panel shown in Figure 1B, except that now the class which was defined, namely "Car Stalled" is shown in block 11G-2.

Figures 1H shows the result after a second class namely "Gauge On Empty" is also defined. This second class is entered in a similar manner, to the sequence explained above for entering the class "Car Stalled".

Figures 1I through 1P illustrate the entry of a logical rule structure (rule tree), using the editor of the present invention. The process begins when the operator presses key F6 followed by key F4, while the panel shown in Figure 1H is displayed. Nothing changed in block 11I-1 from block 11H-1.

Block 11I-2 now displays three subblocks 11I-2A, 11I-2B and 11I-2C. Block 11I-1A tells the operator what information is required by this panel. The operator enters a Node name in block 11I-2b. The operator also uses the cursor 10I to select a Node type for the node being defined. In this case the operator selects a type of GOAL.

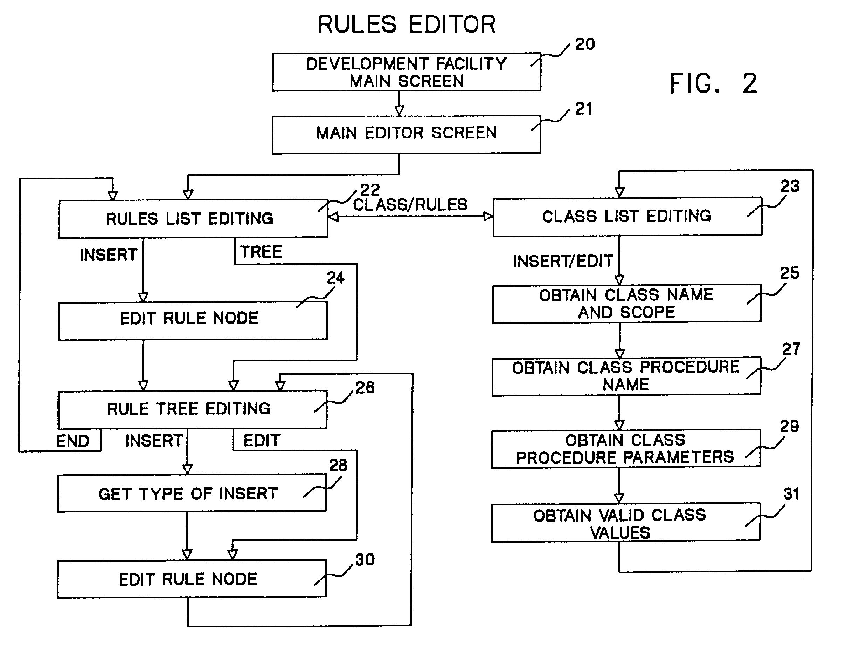

Based upon the node type selected, the user will be presented with different input panels. The panels displayed depend on what attributes that particular type of node requires in its definition. In this case, a GOAL node type is selected, and Figures 2J and 2K illustrate the entry of the procedure which implements the action required by the goal, and the parameters to that procedure.

It is noted that the panels shown for a definition of a Goal are only illustrative. The point is that for each type of node which is being defined, the system displays an appropriate series of panels that lead the operator to enter the appropriate data.

In the case shown here, when the operator defines a goal node, the first panel displayed is the one shown in Figure 1J when the system asks in Box 11J-2a for the procedure that is executed if the goal is proven to be true. After the operator enters the name of the procedure, in this case LINEIO, the system goes to the panel shown in Figure 1K. The panel shown in Figure 1K asks for the parameters which will be passed to the procedure named in the panel shown in Figure 1J. In this case the procedure LINEIO expects a character string and the operator enters the string "Add gas to the car".

Upon completion of the node definition, the tree editor screen is displayed. This is shown in Figure 1L. The defined GOAL node is shown on the left of the screen and the name of the goal is shown on the right. These are actually the top of a tree and as will be seen later as more nodes are defined, panels similar to that shown in Figure 1L show how the nodes interrelate.

To add additional nodes to the tree, function key F4 (INSERT) is again used, resulting in a panel which request a definition as to how the new node should be entered in the structure. This is shown in Figure 1M. The system shown in box 11M-1A that the new node can be either a CHILD, a SIBLING, or a NEW LEVEL with reference to the previous node of the tree.

The cursor 10M is used to select the appropriate type of either Child, Sibling or New level; however, the system helps the operator by placing the cursor initially at an allowable type of insertion. The system will not accept types of insertions that would create invalid types of tree structures. In this example the operator selects "child" because he wants the new node to appear "below" the previously defined goal node. After positioning the cursor to select "child", the operator presses the enter key and the display shown in Figure 1N appears.

Figure 1N illustrate that to select an AND node, the operator appropriately positions the cursor 10N and presses the ENTER key. An AND node has no further attributes, and hence the system returns directly to the tree editor screen after being selected. It is noted that the operator did not have to enter a name in box 11N-2B for a logical AND node. The reason for this is that by definition an AND node can never be at the top of a tree and only nodes at the top of a tree require a name. However, if a name had been entered it would have been acceptable.

After pressing the ENTER key the screen shown in Figure 1O is displayed. This panel is similar to that shown in Figure 1L; however, as can be seen easily, the AND node has been added to the tree as a child of the Goal node.

Figure 1P shows the result of repeating steps similar to those described above in order to enter two evidence nodes. As shown in Figure 1P, the two evidence nodes appear in a child relationship to the AND node. The left hand section of the screen shows the relationship of the nodes and the right hand section shows some relevant information about each node.

An important feature of the invention is the very clear and easy manner in which the relationship of the nodes is automatically illustrated.

Although not specifically shown herein, the editor can also have other features to guide the user through an edit session. For instance, for certain values the user can be presented with a selection list of valid values if he leaves an input field blank and pressing ENTER. The desired value can then be selected by positioning the cursor and pressing ENTER again.

The screens shown in Figure 1A to 1P are generated by a computer program. This program can be coded in any of the regularly used languages such as Pascal of "C" and then compiled in a normal manner. The details of the coding are not relevant to the present invention. The present invention deals with the overall flow and structure of the program.

Figure 2 through Figure 4 show the overall structure and flow of the programs which control the editor function. A computer operating in accordance with the program shown in Figures 2 through 4 constitutes a system or machine which is one embodiment of the applicants invention.

An editing session begins when the user selects the editor function from the Development Facility Main Screen as previously described with reference to Figure 1A. This operation is performed by the program represented by box 20 in Figure 2. Selection of the editor function causes the Main Editor Screen to be displayed as shown in Figure 1B. This operation is performed by the program represented by box 20. From this point, the user can toggle between Rules List Editing (screen section 11B-1 in Figure 1B) and Class List Editing (screen section 11B-2 in Figure 1B) by using the CLASS/RULES function key. Boxes 22 and 23 and the double arrowed line connecting Boxes 22 and 23 represent how the programs switch between Rules List Editing mode (Box 22) and Class List editing (Box 23).

From Class List Editing (Box 23), the user can either insert a new class node or edit an existing one. In either case, the programs lead the user through the definition of the class node as illustrated in Boxes 25, 27, 29, and 31. This follows the flow of the screens shown in Figures 1C through 1F. Box 25 indicates that the user is asked for the name and scope of the class. Box 27 indicates that the user is asked for the name of a procedure which will gather the class input data. Box 29 indicates that the user is asked for parameters required by that procedure. The program represented by Box 31 indicates that the user can enter a list of valid input values for that class. In summary, the panels shown in Figures 1G and 1H are the result of the operations performed by the series of programs represented by boxes 23, 25, 27, 29 and 31.

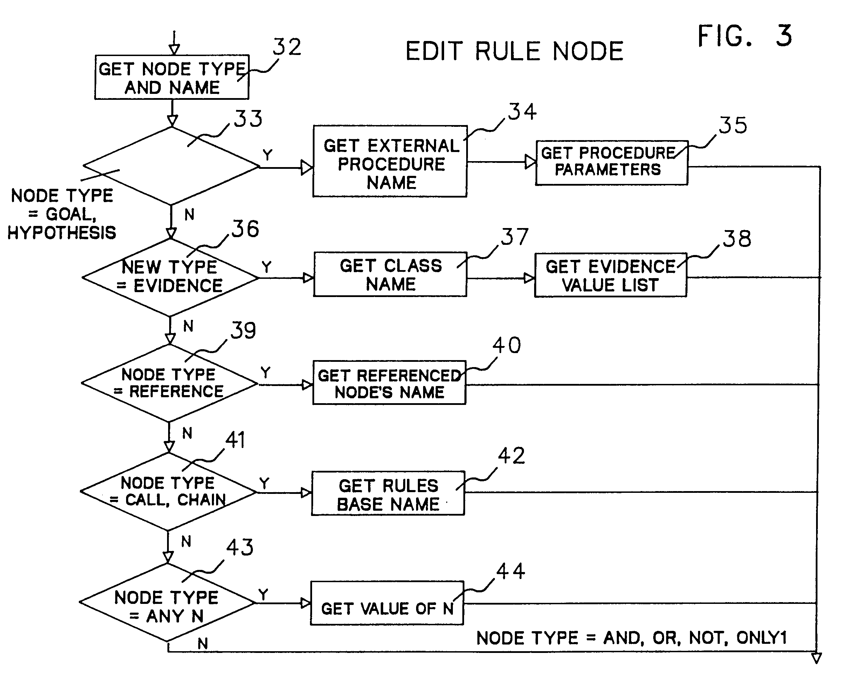

As shown by Figure 1I from Rules List Editing, the user can either create a new rule tree or edit an existing one. The program that performs this operation is represented by box 22. To edit an existing tree, the user presses the TREE function key after positioning the cursor on the tree to be edited, and goes to Rule Tree Editing (Box 26). To create a new rule tree, however, the user presses the INSERT function key and goes to Edit Rule Node (Box 24). These programs would generate the panels shown in Figures 1I to 1K. The control flow inside the program represented by box 24 is shown in further detail in Figure 3.

The Edit Rule Node function (see Figures 1I to 1K) begins by displaying a screen which asks the user for the Node Type and Node Name. The program that does this is represented by Box 32. The rule Node Type is obtained from a selection list (see Figure 1I) to prevent invalid entries. Based on the type selected, the editor configures the editing system and method to request only the attribute information required for that particular type of node.

It should be noted that in the example shown in Figures 1A to 1P, for convenience of illustration, only five node types were shown. The program shown in Figure 3, provides for eleven node types in as much as a practical system would probably require about this many different node types.

The editor changes its operation based upon the node type selected as follows:
If the selected node type is Goal or Hypothesis (Box 33), node attributes of "External Procedure Name" and "Procedure Parameters" are requested (Boxes 34 and 35).
If the selected node type is Evidence (Box 36), node attributes of "Class Name" and "Evidence Value List" are requested (Boxes 37 and 38).
If the selected node type is Reference (Box 39), a node attribute of "Referenced Node's Name" is requested (Box 40).
If the selected node type is Call or Chain (Box 41), a node attribute of "Rules Base Name" is requested (Box 42).
If the selected node type is Any N (Box 43), a node attribute of "Value of N" is requested (Box 44).
As indicated by the N output line on box 43 all other node types (And, Or, Not, Only1) do not require any other attribute information, and will not request it.

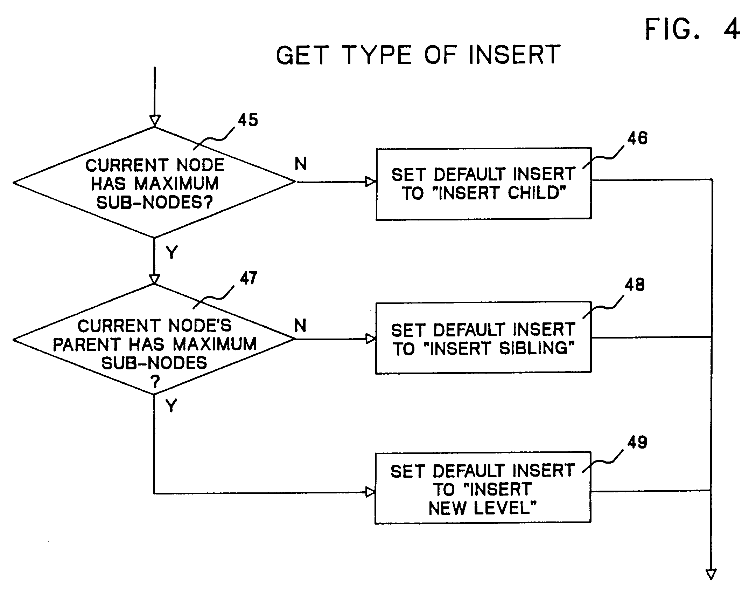

Returning to the Rules Editor program flow in Figure 2, the completion of Edit Rule Node (Box 24) takes the user to Rule Tree Editing Box 26 which is illustrated by the panel shown in Figure 1L. If this is a new rule tree, the rule node just edited appears as the only node in the tree structure. The user can return to Rules List Editing by pressing the END function key. The user can also edit any existing nodes by positioning the cursor on the desired node and pressing the EDIT function key. The Edit Rule Node function (Box 30) follows the flow already described in Figure 3. The user can also choose to add new nodes to the tree structure by positioning the cursor on a node and pressing the INSERT key. If this is done, the editor will perform the Get Type of Insert function (Box 28) shown in Figure 4.

It should be again noted as previously explained that a new node can be inserted into the tree structure in one of three ways. The node can be inserted as a child of the selected node; that is, it will be added under the selected node and the selected node will become its parent. It can be inserted as a sibling of the selected node; that is, it will be added under the selected node's parent, and both nodes will then be children of that parent. The node can also be inserted as a new level; that is, it will be added between the selected node and the selected node's parent.

In Figure 4, the program represented by Box 45 checks to see if the selected node already has its maximum allowable number of sub-nodes (children). The maximum allowable children for the different node types is as follows:
Goal=1,
Hypothesis=1,
Evidence=0,
Reference=0,
Call=0,
Chain=1,
AnyN=unlimited,
And=unlimited,
Or=unlimited,
Not=1,
Only1=unlimited

The reason that node types have different maximums is inherent in the definition of the types. For example, logically an AND can have any number of conditions which are AND'ed whereas a NOT can only refer to one condition which is negated.

If the selected node is not at its maximum, the default insert type is set to "Insert Child" (Box 46). If it is at its maximum, then the selected node's parent is checked to see if it already has its maximum allowable number of children (Box 47). If not, the default insert type is set to "Insert Sibling" (Box 48). If it does, the default insert type is set to "Insert New Level"(Box49).

As shown in Figure 1M, the user is given the opportunity to change this default, but experience has shown that the default is usually the insertion method desired, and providing the default values therefore greatly simplifies the entry of new nodes. This same type of program is used to verify the user's selection, in order to prevent the creation of invalid logic structures.

Once the insertion type is selected (Figure 2, Box 28), the Edit Rule Node function (Box 30) is again performed as shown in Figure 3. Upon completion of Edit Rule Node, the tree structure with the new rule node is displayed by returning to Rule Tree Editing (Box 26). This is shown in Figure 1P.

From this description of the preferred embodiment of the invention, those skilled in the art will recognize a wide variety of applications for the method and variations appropriate to particular applications and to the operation in data processing systems of various designs.

## Claims

1. A context sensitive editor system for generating expert systems comprising:
means for presenting a series of screens (1A-1F) which provide for the entry of the definition of a class of information, said definition including a name, a scope of local, global or external, a designation of the procedure required to obtain the information and the parameters required by said procedure, the allowable values for the information,
means for presenting a second series of screens (1G-1P) which provide for the entry of the definition of, a set of logical nodes, each node having a type, and each type of node having a set of attributes which is particular to said type of node, and logical rule structures defining how the nodes interrelate,
wherein said second series of screens comprises certain subsets of screens (1I-1H; 1N-1O), each of said certain sub-sets corresponding to a different type of node, said sub-sets of screens providing for the entry of said attributes by a user,
said means for presenting a second series of screens comprising means for automatically selecting one of said certain sub-sets in response to a users definition of the type of a node, whereby the screens lead the user through the definitions and prevent erroneous inputs,
means for presenting a tree structure screen after each node and its relationships are defined, said tree structure screen graphically showing the interrelation of the nodes.

2. A method of editing data to generate an expert system comprising the steps of:
presenting a series of screens (1A-1F) which provide for the entry of the definition of a class of information,
said definition including a name, a scope of local, global, or external, a designation of the procedure required to obtain the information and the parameters required by said procedure, the allowable values for the information,
presenting a second series of screens (1G-1P) which provide for the entry of the definition of:
a set of logical nodes, each node having a type, and each type of node having a set of attributes which is particular to said type of node, and logical rules structures defining how the nodes interrelate,
said second series of screens comprising certain sub-sets of screens (1I-1M; 1N-1O), each of said certain sub-sets corresponding to a different type of node, said sub-sets of screens providing for the entry of said attributes,
whereby said step of presenting a second series of screens comprises a step of selecting one of said certain sub-sets of screens in response to a users definition of the type of a node
after each node and its relationships are defined presenting a tree structure screen graphically showing the interrelation of the nodes,
whereby the screens lead the user through the definitions and prevent erroneous inputs.

3. The method according to claim 2 wherein
said screen showing the interrelation of the nodes shows lines depicting the relationship tree of the nodes.

4. The system according to claim 1 wherein
said screen showing the interrelation of the nodes shows lines depicting the relationship of the nodes.

## Patentansprüche

1. Ein kontextbezogenes Editorsystem für die Erzeugung von Expertensystemen, umfassend:
Mittel für die Anzeige einer Folge von Bildschirmen (1A-1F) für die Eingabe der Definition für eine Klasse von Informationen, wobei die Definition einen Namen, einen Gültigkeitsbereich (lokal, global oder extern), eine Kennzeichnung der Prozedur zur Ermittlung der Informationen und die von dieser Prozedur benötigten Parameter, die zulässigen Werte für die Informationen umfaß,
Mittel für die Anzeige einer zweiten Folge von Bildschirmen (1G-1P) für die Eingabe der Definition einer Gruppe von logischen Knoten, wobei jeder Knoten zu einem Typ gehört und jeder Knotentyp über eine Gruppe von Attributen speziell für diesen Knotentyp sowie über logische Regelstrukturen verfügt, die definieren, in welcher Beziehung die Knoten zueinander stehen,
worin die zweite Folge von Bildschirmen bestimmte Untergruppen von Bildschirmen (1I-1M; 1N-1O) umfaßt, und jede dieser bestimmten Untergruppen einem anderen Knotentyp entspricht, wobei die Bildschirmuntergruppen die Eingabe der Attribute durch einen Benutzer ermöglichen,
wobei diese Mittel für die Anzeige einer zweiten Folge von Bildschirmen Mittel für die automatische Auswahl einer der bestimmten Untergruppen als Reaktion auf die Definition eines Knotentyps durch den Benutzer umfassen, wobei die Bildschirme den Benutzer durch die Definitionen führen und fehlerhafte Eingaben verhindern,
Mittel für die Anzeige eines Bildschirms mit einer Baumstruktur, nachdem jeder Knoten und seine Beziehungen definiert wurden, wobei dieser Bildschirm mit einer Baumstruktur die Beziehung der Knoten zueinander grafisch darstellt.

2. Ein Verfahren für das Editieren von Daten zur Erzeugung eines Expertensystems, das die folgenden Schritte umfaßt:
Anzeigen einer Folge von Bildschirmen (1A-1F) für die Eingabe der Definition für eine Klasse von Informationen,
wobei die Definition einen Namen, einen Gültigkeitsbereich (lokal, global oder extern), eine Kennzeichnung der Prozedur zur Ermittlung der Informationen und die von dieser Prozedur benötigten Parameter, die zulässigen Werte für die Informationen, umfaßt,
Anzeigen einer zweiten Folge von Bildschirmen (1G-1P) für die Eingabe der Definition:
einer Gruppe von logischen Knoten, wobei jeder Knoten zu einem Typ gehört und jeder Knotentyp über eine Gruppe von Attributen speziell für diesen Knotentyp sowie über logische Regelstrukturen verfügt, die definieren, in welcher Beziehung die Knoten zueinander stehen,
worbei die zweite Folge von Bildschirmen bestimmte Untergruppen von Bildschirmen (1I-1M; 1N-1O) umfaßt, und jede dieser bestimmten Untergruppen einem anderen Knotentyp entspricht, und die Bildschirmuntergruppen die Eingabe der Attribute ermöglichen,
wobei der Schritt des Anzeigens einer zweiten Folge von Bildschirmen einen Schritt der Auswahl einer der bestimmten Bildschirmuntergruppen als Reaktion auf die Definition eines Knotentyps durch den Benutzer umfaßt,
nachdem jeder Knoten und seine Beziehungen definiert sind, wird ein Bildschirm mit einer Baumstruktur angezeigt, der die Beziehungen zwischen den Knoten veranschaulicht.
wobei die Bildschirme den Benutzer durch die Definitionen führen und fehlerhafte Eingaben verhindern,

3. Das Verfahren nach Anspruch 2, wobei der Bildschirm mit der Anzeige der Beziehung der Knoten zueinander Linien enthält, die die Baumstruktur der Knotenbeziehungen darstellen.

4. Das System nach Anspruch 1, wobei der Bildschirm mit der Anzeige der Beziehung der Knoten zueinander Linien enthält, die das Verhältnis der Knoten zueinander darstellen.

## Revendications

1. Système éditeur sensible au contexte, pour générer des systèmes experts, comprenant :
des moyens pour présenter une série d'écrans (1A à 1F), assurant l'entrée de la définition d'une classe d'information, ladite définition comprenant un nom, une étendue d'ordre local, global ou externe, une désignation de la procédure requise pour obtenir l'information et les paramètres requis par ladite procédure, les valeurs admissibles pour l'information,
des moyens pour présenter une deuxième série d'écrans (1G à 1P) assurant l'entrée de la définition d'un jeu de noeuds logiques, chaque noeud ayant un type et chaque type de noeud ayant un jeu d'attributs particulier audit type de noeud, et des structures de règle logiques définissant la façon dont les noeuds sont reliés entre eux,
dans lequel ladite deuxième série d'écrans comprend des sous-jeux d'écrans (1I à 1M; 1N à 1O) donnés, chacun desdits sous-jeux correspondant à un type de noeud différent, lesdits sous-jeux d'écrans étant destinés à assurer l'entrée desdits attributs, par un utilisateur,
lesdits moyens de présentation d'une deuxième série d'écrans comprenant des moyens pour sélectionner automatiquement l'un desdits sous-jeux donnés, en réponse à une définition utilisateur du type d'un noeud, de manière que les écrans guident l'utilisateur à travers les définitions et empêchent toute possibilité d'entrée erronée,
des moyens de présentation d'un écran à structure en arbre, après que chaque noeud et ses relations aient été définis, ledit écran à structure en arbre représentant graphiquement les relations entre les noeuds.

2. Procédé d'édition de données pour générer un système expert comprenant les étapes de :
présentation d'une série d'écrans (1A à 1F), assurant l'entrée de la définition d'une classe d'information,
ladite définition comprenant un nom, une étendue d'ordre local, global ou externe, la désignation de la procédure requise pour obtenir l'information et les paramètres requis par ladite procédure, les valeurs admissibles pour l'information,
la présentation d'une deuxième séries d'écrans (1G à 1P) permettant d'assurer l'entrée de la définition d' :
un jeu de noeuds logiques, chaque noeud ayant un type et chaque type de noeud ayant un jeu d'attributs qui est particulier audit type de noeud, et des structures de règles logiques définissant la façon selon laquelle les noeuds sont reliés entre eux,
ladite deuxième série d'écrans comprend un sous-jeux d'écrans (1I à 1M; 1N à 1O) donné, chacun desdits sous-jeux donnés correspondant à un type de noeuds différents, lesdits sous-jeux d'écrans permettant d'assurer l'entrée desdits attributs,
de manière que ladite étape de présentation d'une deuxième série d'écrans comprenne une étape de sélection d'un desdits sous-jeux d'écrans donnés, en réponse à une définition utilisateur du type de noeud,
après que chaque noeud et ses relations aient été définis, présentation d'un écran à structure en arbre représentant graphiquement la relation entre les noeuds,
de manière que les écrans guident l'utilisateur à travers les définitions et empêche toute possibilité d'entrée erronée.

3. Procédé selon la revendication 2, dans lequel ledit écran représentant la relation entre les noeuds représente des lignes décrivant l'arbre de relation des noeuds.

4. Système selon la revendication 1, dans lequel ledit écran représentant la relation entre les noeuds représentent des lignes décrivant la relation des noeuds
